# EUROPÄISCHE PATENTANMELDUNG

(11) **EP 2 072 592 A1**
(43) Veröffentlichungstag der Anmeldung: **24.06.2009**
(21) Anmeldenummer: 07150284.3
(22) Anmeldetag: 21.12.2007
(51) Int. Cl.: C09J 4/06

(54) **Zweikomponentige radikalisch härtbare (Meth)acrylat-Klebstoffzusammensetzung mit visuell sichtbarem Härtungsindikator**

(71) Anmelder: Sika Technology AG, 6340 Baar (CH)
(72) Erfinder: Cirillo, Fabio, 8406 Winterthur (CH); Maier, Steffen, 5430 Wettingen (CH)
(74) Vertreter: Sika Patent Attorneys

(57) **Zusammenfassung**

Die vorliegende Erfindung betrifft radikalisch härtbare zweikomponentige (Meth)acrylat-Klebstoffzusammensetzungen, welche aus einer ersten Komponente **(K1)** und einer zweiten Komponente **(K2)** bestehen, wobei die erste Komponente **(K1)** mindestens ein radikalisch polymerisierbares (Meth)acrylatmonomer sowie ein Reduktionsmittel **(RM)** enthält und die die zweite Komponente **(K2)** mindestens ein Oxidationsmittel **(OM)** enthält. Das Reduktionsmittel **(RM)** reagiert durch den Kontakt mit dem Oxidationsmittel **(OM),** wobei eine Aufspaltung des Oxidationsmittels **(OM)** in Radikale und ein visuell sichtbarer Farbwechsel des Reduktionsmittels **(RM)** bewirkt wird.

## Beschreibung

### Technisches Gebiet

Die vorliegende Erfindung betrifft das Gebiet der radikalisch härtbaren zweikomponentigen (Meth)acrylat-Klebstoffe.

### Stand der Technik

Radikalisch härtbare zweikomponentige (Meth)acrylatklebstoffe, bei denen die Härtung des Systems erst beim Vermischen der beiden Komponenten einsetzt, sind beispielsweise aus WO 02/070619 A1 oder WO 02/070620 A1 bekannt.

Ein Problem bei derartigen Systemen liegt darin, dass es schwierig sein kann, den Zeitpunkt der beginnenden Aushärtung zu bestimmen, bzw. den Verlauf der Aushärtung zu verfolgen. Auch die Überprüfung, ob die beiden Komponenten ausreichend, bzw. im richtigen Verhältnis miteinander vermischt wurden, bietet gelegentlich Schwierigkeiten. Die zu diesem Zweck gelegentlich verwendete Beobachtung mit Hilfe eines Temperatursensors ist verhältnismässig aufwändig; ein Spachteltest ist zwar gangbar aber nicht allzu genau und erfordert zudem entsprechende Erfahrung.

EP 1 453 925 A1 hat vorgeschlagen für UV-härtende Klebstoffe, welche einen Photoinitator enthalten, Leukofarbstoffe oder Azofarbstoffe zu verwenden, um den Härtungsverlauf zu kontrollieren.

Auch WO 98/34980 A1 schlägt vor den Härtungsverlauf mittels eines zugesetzten Farbstoffs zu überprüfen. Dabei umfasst die erste Komponente zunächst einmal ein radikalisch polymerisierbares Monomer wie beispielsweise ein (meth)acrylatbasiertes Monomer sowie ein Reduktionsmittel und einen Farbstoff, während die zweite Komponente ein Peroxid als Oxidationsmittel enthält. Insbesondere werden als Reduktionsmittel tertiäre Amine wie Diisopropyl-p-Toluidin, Dimethylanilin oder Dimethyl-p-Toluidin offenbart. Durch die Verwendung eines weiteren Inhaltsstoffes wird die Herstellung des Klebstoffes komplizierter und damit fehleranfälliger. Zudem stellt der Grossteil derartiger üblich eingesetzter Reduktionsmittel leicht flüchtige und/oder migrierende und/oder toxikologisch bedenklich Substanzen dar.

### Darstellung der Erfindung

Aufgabe der vorliegenden Erfindung ist es daher, die Nachteile des Standes der Technik zu überwinden und zweikomponentige radikalisch härtbare (Meth)acrylat-Klebstoffzusammensetzungen zur Verfügung zu stellen, welche ohne zusätzliche Reduktionsmittel formuliert werden.

Überraschenderweise wurde gefunden, dass diese Aufgabe durch eine Zusammensetzung gemäss Anspruch 1 zu lösen vermag.

Die Zusammensetzungen sind bestens geeignet, visuell einerseits die Mischgüte und andererseits das Ende der Offenzeit und damit den Härtungsverlauf anzuzeigen. Zudem verfügen sie über den grossen Vorteil, dass keine kleinmolekularen und damit flüchtigen und/oder migrierende Reduktionsmittel vorhanden sind, welche leicht aus dem Klebstoff heraus auf die Haut oder in die Luft gelangen und Anlass zu toxikologischen und arbeitshygienischen Bedenken geben.

Weitere Aspekt der vorliegenden Erfindung sind ein Verfahren zum Verkleben gemäss Anspruch 12, eine gehärtete Zusammensetzung gemäss Anspruch 14 sowie ein Verbundkörper gemäss Anspruch 15.

Bevorzugte Ausführungsformen der Erfindung sind Gegenstand der Unteransprüche.

### Wege zur Ausführung der Erfindung

In einem ersten Aspekt betrifft die vorliegende Erfindung eine radikalisch härtbare zweikomponentige (Meth)acrylat-Klebstoffzusammensetzung, bestehend aus einer ersten Komponente **(K1)** und einer zweiten Komponente **(K2).**

Die erste Komponente **(K1)** enthält mindestens ein radikalisch polymerisierbares (Meth)acrylatmonomer sowie ein Reduktionsmittel **(RM),** während die zweite Komponente **(K2)** mindestens ein Oxidationsmittel **(OM)** enthält.

Wesentlich für das Wesen der vorliegenden Erfindung ist, dass das Reduktionsmittel **(RM)** durch den Kontakt mit dem Oxidationsmittel **(OM)** reagiert, wobei eine Aufspaltung des Oxidationsmittels **(OM)** in Radikale und ein visuell sichtbarer Farbwechsel des Reduktionsmittels **(RM)** bewirkt wird und dass die zweikomponentige (Meth)acrylat-Klebstoffzusammensetzung frei von Reduktionsmitteln ist, welche beim Kontakt mit dem Oxidationsmittel **(OM)** keinen visuellen Farbwechsel erfahren.

Die (Meth)acrylat-Klebstoffzusammensetzung ist eine zweikomponentige radikalisch härtbare Zusammensetzung und grenzt sich somit klar von strahlungshärtenden (Meth)acrylat-Klebstoffzusammensetzungen ab. Eine zweikomponentige radikalisch härtbare Zusammensetzung härtet auch ohne Strahlung beim Mischen der zwei Komponenten aus, während bei einer strahlungshärtenden Zusammensetzung ein Bestrahlen der Zusammensetzung notwenig ist. Strahlungshärtende Zusammensetzungen werden primär für Beschichtungen verwendet und können nur für das Verkleben von für die notwendige Strahlung transparente Substraten verwendet werden, während bei zweikomponentigen radikalisch härtbaren (Meth)acrylat-Zusammensetzung jegliche Substrate für das Verkleben verwendet werden können.

Die erste Komponente **(K1)** enthält mindestens ein radikalisch polymerisierbares (Meth)acrylatmonomer. Grundsätzlich sind alle (Meth)acrylatmonomeren möglich. Auf dem Markt ist eine Vielzahl derartiger (Meth)acrylatmonomeren kommerziell erhältlich. Bevorzugt als (Meth)acrylatmonomere sind Methacrylate. Insbesondere ist es ausgewählt aus der Gruppe bestehend aus Methylmethacrylat (MMA), Tetrahydrofurfurylmethacrylat (THFMA), Cyclohexylmethacrylat (CHMA), Isobornylmethacrylat (IBMA), Trimethylcyclohexylmethacrylat (TMCHMA), bevorzugt Methylmethacrylat (MMA) und Tetrahydrofurfurylmethacrylat (THFMA).

Neben diesen monofunktionellen (Meth)acrylatmonomeren sind auch di- oder trifunktionelle (Meth)acrylatmonomere verwendbar, wie beispielsweise Trimethylolpropandi(meth)acrylat oder -tri(meth)acrylat. Besonders geeignet sind auch sogenannte Epoxy-(meth)acrylate, insbesondere die Additionsprodukte von Bisphenol-A-Diglycidylether mit (Meth)acrylsäure oder Bisphenol-A-(Meth)acrylsäureester, bzw. deren Alkoxylierungsprodukte.

Besonders bevorzugt sind (Meth)acrylatmonomere, welche zu einen hohen Glasübergangspunkt (Tg) haben, insbesondere solche deren Homopolymerisations-Tg über 60°C, insbesondere über 80°C liegt.

Der Anteil aller radikalisch polymerisierbaren (Meth)acrylatmonomere beträgt vorteilhaft 1 - 99 Gew.-%, insbesondere 5 - 90 Gew.-%, bevorzugt 10 - 80 Gew.-%, am Gewicht der Klebstoffzusammensetzung.

Die erste Komponente **(K1)** enthält ein Reduktionsmittel **(RM),** welches durch den Kontakt mit dem Oxidationsmittel **(OM)** reagiert, wobei eine Aufspaltung des Oxidationsmittels **(OM)** in Radikale und ein visuell sichtbarern Farbwechsel des Reduktionsmittels **(RM)** bewirkt wird.
Grundsätzlich ist jeder visuell sichtbare Farbwechsel möglich. So sind beispielsweise Farbwechsel zwischen zwei Farben, insbesondere von zwei kontrastreichen Farben, wie blau zu rot oder blau zu gelb besonders geeignet hierfür.

Besonders bevorzugt sind Reduktionsmittel **(RM),** welche in Kontakt mit dem Oxidationsmittel **(OM)** der zweiten Komponente einen Farbwechsel von farblos zu farbig erfahren.
Insbesondere handelt es sich beim Reduktionsmittel **(RM)** um einen Leukofarbstoff, der zunächst als farblose Leukoform vorliegt und bei Reaktion mit dem Oxidationsmittel **(OM),** d.h. nach dem Vermischen der zwei Komponenten, in eine farbige, vorzugsweise intensiv farbige Form umgewandelt wird.

Bevorzugte Leukofarbstoffe als Reduktionsmittel **(RM)** weisen die die Formel (I a) oder (I b) auf.

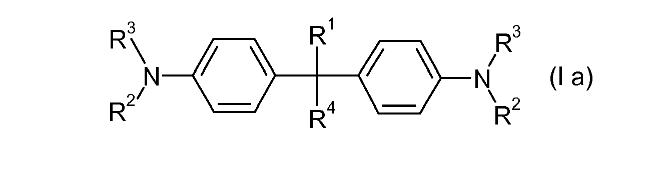

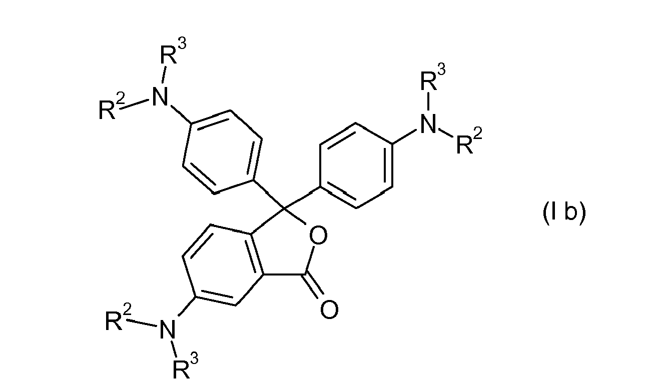

Hierbei steht R¹ für H oder OH und R² und R³ stehen je unabhängig voneinander für eine Alkylgruppe mit 1 bis 8 Kohlenstoffatomen oder eine Hydroxyalkylgruppe mit 1 bis 8 Kohlenstoffatomen, welche gegebenenfalls mindestens ein Sauerstoffatom in Form von Ethersauerstoffatomen aufweist.
Weiterhin steht R⁴ für H, Phenyl, Aryl oder einen Rest der Formel (II).

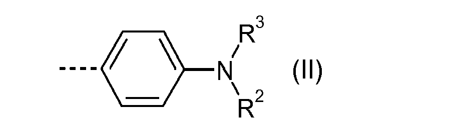

Meist bevorzugt als das Reduktionsmittel **(RM)** sind Leukokristallviolettlacton oder Leukokristallviolett, insbesondere Leukokristallviolett.

Der Anteil des Reduktionsmittels **(RM)** beträgt vorteilhaft 0.2 - 5.0 Gew.-%, insbesondere 1.0 - 2.5 Gew.-%, am Gewicht der Klebstoffzusammensetzung.

Die zweite Komponente **(K2)** enthält mindestens ein Oxidationsmittel **(OM)** enthält. Derartige Oxidationsmittel sind dem Fachmann bestens bekannt. Es handelt sich insbesondere um ein organisches Peroxid, Hydroperoxid oder Perester. Bevorzugt sind organische Peroxide. Meist bevorzugt ist das Oxidationsmittel **(OM)** Dibenzoylperoxid, welches vorzugsweise in einer Weichmacherpaste zum Einsatz kommt.
Der Anteil aller Oxidationsmittel **(OM)** beträgt vorteilhaft 1- 30 Gew.-%, insbesondere 1 - 20 Gew.-%, bevorzugt 1 - 10 Gew.-%, am Gewicht der Klebstoffzusammensetzung.

Die radikalisch härtbare zweikomponentige (Meth)acrylat-Klebstoffzusammensetzung kann weiterhin mindestens ein bei Raumtemperatur flüssiges Elastomer oder Flüssigkautschuk (**C**) enthalten. Insbesondere geeignete Elastomere sind Elastomere, welche die Schlagzähigkeit erhöhen.
Insbesondere geeignet sind bei Raumtemperatur flüssige Elastomere oder Flüssigkautschuke, welche olefinisch ungesättigte Gruppen aufweisen, bevorzugt ein (Meth)acrylat-Gruppen aufweisendes Polyurethan-Polymer oder Polybutad ien-Copolymer.
Beispielsweise sind dies Acrylnitril/Butadien-Copolymere und deren Derivate, wie beispielsweise (Meth)acrylat-terminerte Acrylnitril/Butadien-Copolymere, wie sie beispielsweise unter dem Namen Hycar® VTBN oder Hycar® VTB von Emerald Performance Materials LLC, USA, kommerziell erhältlich sind. Eine weitere Beispielsklasse für derartige Elastomere (C) sind Polyurethan(meth)acrylate. Derartige Verbindungen sind typischerweise herstellbar aus der Reaktion von mindestens einem Diol mit mindestens einem Diisocyanat und einer (Meth)acrylsäure, einem (Meth)acrylamid oder einem (Meth)acrylsäureester, welcher eine Hydroxylgruppe aufweist.
In einem ersten Verfahren kann diese Umsetzung dadurch erfolgen, dass das Diol und das Diisocyanat mit üblichen Verfahren, beispielsweise bei Temperaturen von 50°C bis 100 °C, gegebenenfalls unter Mitverwendung geeigneter Katalysatoren, zur Reaktion gebracht werden, wobei darauf zu achten ist, dass die NCO-Gruppen gegenüber den OH-Gruppen im stöchiometrischen Überschuss vorliegen. Das aus dieser Umsetzung resultierende Isocyanatgruppen terminierte Polyurethanpolymer wird dann mit einer (Meth)-acrylsäure, einem (Meth)acrylamid oder mit einem (Meth)acrylsäureester, welcher eine Hydroxylgruppe aufweist, insbesondere mit einem Hydroxyalkyl-(meth)acrylat wie Hydroxypropylacrylat (HPA), Hydroxypropylmethacrylat (HPMA), Hydroxybutylacrylat (HBA) oder Hydroxybutylmethacrylat (HBMA) bevorzugt mit Hydroxyethylacrylat (HEA) oder Hydroxyethylmethacrylat (HEMA), oder mit einem Monohydroxypoly(meth)acrylat eines Polyols, bevorzugt von Glycerin oder Trimethylolpropan, zu einem Polyurethan(meth)-acrylat, umgesetzt.

In einem zweiten Verfahren kann das Diol mit dem Diisocyanat umgesetzt werden, wobei die OH-Gruppen gegenüber den NCO-Gruppen im stöchiometrischen Überschuss vorliegen. Das aus dieser Umsetzung resultierende Hydroxylgruppen terminierte Polyurethanpolymer kann mit einer (Meth)acrylsäure zum Elastomer (**C**) verestert werden.
Ein weiteres Verfahren zur Herstellung des Elastomers (**C**) ist, in einem ersten Schritt die (Meth)acrylsäure, das (Meth)acrylamid oder den (Meth)acrylsäureester, welcher eine Hydroxylgruppe aufweist, insbesondere Hydroxyalkyl(meth)acrylat wie Hydroxypropylacrylat (HPA), Hydroxypropylmethacrylat (HPMA), Hydroxybutylacrylat (HBA) oder Hydroxybutylmethacrylat (HBMA), bevorzugt Hydroxyethylacrylat (HEA) oder Hydroxyethylmethacrylat (HEMA), oder ein Monohydroxypoly(meth)acrylat eines Polyols, bevorzugt von Glycerin oder Trimethylolpropan, mit mindestens einem Diisocyanat umzusetzen, welches in einer Menge eingesetzt wird, dass die NCO-Gruppen gegenüber den OH-Gruppen im Überschuss vorliegen. In einer folgenden Reaktion wird das resultierende, eine Isocyanatgruppe aufweisende Zwischenprodukt mit mindestens einem Diol zum Elastomer (**C**) umgesetzt.
Ebenfalls möglich ist die Herstellung des Elastomers (**C**) durch eine Veresterung einer (Meth)acrylsäure mit einem Diol, wobei das Diol in stöchiometrischem Überschuss vorliegt. In einer anschliessenden Reaktion reagiert das teilveresterte Diol mit einem Diisocyanat zum Elastomer (**C**).

Bevorzugte Diole sind Polyoxyalkylendiole, auch "Polyetherdiole" genannt, Polyesterdiole, Polycarbonatdiole und deren Mischungen. Die meist bevorzugten Diole sind Polyoxyethylendiole, Polyoxypropylendiole oder Polyoxybutylendiole.
Die Polyoxyalkylendiole können unterschiedliche Ungesättigtheitsgrade (gemessen nach ASTM D-2849-69 und angegeben in Milliequivalent Ungesättigtheit pro Gramm Polyol (mEq/g)) aufweisen. Jene mit einem niedrigen Ungesättigtheitsgrad werden beispielsweise mit Hilfe von so genannten Double Metal Cyanide Komplex-Katalysatoren (DMC-Katalysatoren) hergestellt, jene mit einem höheren Ungesättigtheitsgrad werden beispielsweise mit Hilfe von anionischen Katalysatoren wie NaOH, KOH, CsOH oder Alkalialkoholaten hergestellt.
Die Verwendung von Polyoxyalkylendiolen mit tiefem Ungesättigtheitsgrad, insbesondere von weniger als 0.01 mEq/g, wird für Diole mit einem Molekulargewicht von ≥ 2000 g/mol bevorzugt.

Als Diisocyanate eignen sich grundsätzlich alle Diisocyanate. Beispielsweise sind erwähnt 1,6-Hexamethylendiisocyanat (HDI), 2-Methylpentamethylen-1,5-diisocyanat, 2,2,4- und 2,4,4-Trimethyl-1,6-hexamethylendiisocyanat (TMDI), 1,12-Dodecamethylendiisocyanat, Lysin- und Lysinesterdiisocyanat, Cyclohexan-1,3-diisocyanat, Cyclohexan-1,4-diisocyanat, 1-Isocyanato-3,3,5-trimethyl-5-isocyanatomethyl-cyclohexan (= Isophorondiisocyanat oder IPDI), Perhydro-2,4'-diphenylmethandiisocyanat und Perhydro-4,4'-diphenylmethandiisocyanat, 1,4-Diisocyanato-2,2,6-trimethylcyclohexan (TMCDI), 1,3-und 1,4-Bis-(isocyanatomethyl)-cyclohexan, m- und p-Xylylendiisocyanat (mund p-XDI), m- und p-Tetramethyl-1,3-xylylendiisocyanat, m- und p-Tetramethyl-1,4-xylylendiisocyanat, Bis-(1-Isocyanato-1-methylethyl)-naphthalin, 2,4- und 2,6-Toluylendiisocyanat (TDI), 4,4'-, 2,4'- und 2,2'-Diphenylmethandiisocyanat (MDI), 1,3- und 1,4-Phenylendiisocyanat, 2,3,5,6-Tetramethyl-1,4-diisocyanatobenzol, Naphthalin-1,5-diisocyanat (NDI), 3,3'-Dimethyl-4,4'-diisocyanatodiphenyl (TODI); Oligomere und Polymere der vorgenannten Isocyanate, sowie beliebige Mischungen der vorgenannten Isocyanate.
Bevorzugtes Diisocyanat ist 1-Isocyanato-3,3,5-trimethyl-5-isocyanatomethyl-cyclohexan (IPDI).
Der Anteil aller bei Raumtemperatur flüssiges Elastomer oder Flüssigkautschuk (**C**) Oxidationsmittel **(OM)** beträgt vorteilhaft 0.1- 50 Gew.-%, insbesondere 1 - 30 Gew.-%, bevorzugt 1 - 20 Gew.-%, am Gewicht der Klebstoffzusammensetzung.

Weiterhin kann die Zusammensetzung zusätzlich mindestens ein Core-Shell Polymer (**D**) enthalten. Core-Shell Polymere bestehen aus einem elastischen Kernpolymer (Core) und einem starren Schalen-Polymer (Shell). Insbesondere geeignete Core-Shell Polymere bestehen aus einer starren Schale eines starren thermoplastischen Polymers, welcher auf einem Kern aus vernetztem elastischem Acrylat- oder Butadien-Polymer aufgepfropft ist.
Besonders geeignete Core-Shell-Polymere sind diejenigen, welche im radikalisch polymerisierbares (Meth)acrylatmonomer aufquellen, sich aber darin nicht lösen.
Bevorzugte Core-Shell-Polymere sind so genannte MBS Polymere, welche beispielsweise kommerziell unter dem Handelsnamen Clearstrength® von Arkema Inc., USA, oder Paraloid® von Rohm and Haas, USA, erhältlich sind. Die Core-Shell Polymere (Summe aller Core-Shell Polymere) werden bevorzugt in einer Menge von 0.01 bis 30 Gew.-%, insbesondere von 10 bis 20 Gew.-%, bezogen auf die gesamte Zusammensetzung, eingesetzt.

Die Zusammensetzung kann weiterhin zusätzlich mindestens einen Haftverbesserer (**E**), insbesondere ein Metall(meth)acrylat, bevorzugt ein Metall(meth)acrylat von Calcium, Magnesium oder Zink, welches eine Hydroxylgruppe und/oder (Meth)acrylsäure oder (Meth)acrylat als Ligand oder Anion aufweist; oder ein (Meth)acrylat der Formel (IV) enthalten

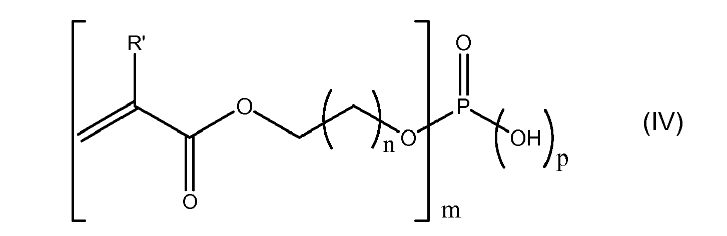

Hierbei steht der Rest R' entweder für ein Wasserstoffatom oder für eine Methylgruppe. n steht für einen Wert von 1 bis 15, insbesondere von 1 bis 5, bevorzugt von 1 bis 3. m steht für einen Wert von 1 bis 3 steht und p für einen Wert von 3 minus m.
Bevorzugte Metall(meth)acrylate sind Metall(meth)acrylate von Calcium, Magnesium oder Zink, welche eine Hydroxylgruppe und/oder (Meth)-acrylsäure oder (Meth)acrylat als Ligand oder Anion aufweisen. Besonders bevorzugte Metall(meth)acrylate sind Zink-(Meth)acrylat, Calcium-(Meth)-acrylat, Zn(OH)(Meth)acrylat und Magnesium-(Meth)acrylat.

Bevorzugte (Meth)acrylate der Formel (IV) sind 2-Methacryloyloxyethylphosphat, Bis(2-Methacryloyloxyethyl)phosphat sowie Tris(2-Methacryloyloxyethyl)phosphat und Mischungen davon.

Der Anteil aller Haftverbesserers an der gesamten Zusammensetzung beträgt vorzugsweise zwischen 0.01 und 5 Gew.-%, insbesondere zwischen 0.5 und 4 Gew.-%.

Die Zusammensetzung kann weiterhin zusätzlich mindestens einen Alkoxysilan-Haftvermittler (**F**) enthalten, insbesondere bevorzugt sind Vinyltrimethoxysilan, Vinyltriethoxysilan, 3-Glycidyloxypropyl-trimethoxysilan; 3-Glycidyloxypropyl-triethoxysilan, 3-(Meth)acryloxypropyltrimethoxysilan und 3-(Meth)acryloxypropyltriethoxysilan.
Der Anteil aller Alkoxysilan-Haftvermittler (**F**) beträgt vorteilhaft 0.1 - 10 Gew.-%, insbesondere 0.2 - 8 Gew.-%, bevorzugt 0.3 - 5 Gew.-%, am Gewicht der Klebstoffzusammensetzung.

Weiterhin kann die Zusammensetzung zusätzlich mindestens einen Füllstoff (**G**) enthalten. Insbesondere geeignet sind dabei natürliche, gemahlene oder gefällte Calciumcarbonate (Kreiden), welche gegebenenfalls mit Fettsäuren, insbesondere Stearaten, beschichtet sind, Montmorillonite, Bentonite, Bariumsulfat (BaSO₄, auch Baryt oder Schwerspat genannt), calcinierte Kaoline, Quarzmehl, Aluminiumoxide, Aluminiumhydroxide, Kieselsäuren, insbesondere pyrogene Kieselsäuren, modifizierte Rizinusölderivate und Polymerpulver oder Polymerfasern. Bevorzugt sind Calciumcarbonate, meist bevorzugt sind beschichtete Calciumcarbonate.
Der Füllstoff (**G**) (Summe aller Füllstoffe) wird üblicherweise in einer Menge von 0.01 bis 30 Gew.-%, insbesondere von 10 bis 30 Gew.-%, bevorzugt 15 bis 20 Gew.-%, bezogen auf die gesamte Zusammensetzung, eingesetzt.

Die Zusammensetzung kann gegebenenfalls zusätzlich noch weitere Bestandteile enthalten. Derartige zusätzliche Bestandteile sind insbesondere ausgewählt aus der Gruppe bestehend aus Zähigkeitsmodifikatoren, Farbstoffe, Pigmente, Inhibitoren, UV-Stabilisatoren, Metalloxide, Antistatika, Flammschutzmittel, Biozide, Weichmacher, Wachse, Verlaufsmittel, Haftvermittler, Thixotropiermittel, Abstandhalter.
Die zusätzlichen Bestandteile dieser Gruppe werden insbesondere in einer individuellen Menge von 0.01 bis 5 Gew.-%, insbesondere 0.02 bis 3 Gew.-%, bezogen auf die gesamte Zusammensetzung, eingesetzt. Die Summe aller Bestandteile dieser Gruppe liegt typischerweise unter 20 Gew.-%, insbesondere unter 15 Gew.-% bezogen auf die gesamte Zusammensetzung.

Bei der Auswahl all dieser optionalen Bestandteile weiss der Fachmann, dass er darauf zu achten hat, dass diese Bestandteile nicht die Lagerstabilität der jeweiligen Komponente unzulässig vermindert.

Wesentlicher Kern der vorliegenden Erfindung ist, dass die zweikomponentige Klebstoffzusammensetzung frei von Reduktionsmitteln ist, welche beim Kontakt mit dem Oxidationsmittel **(OM)** keinen visuellen Farbwechsel erfahren.

Insbesondere ist die Zusammensetzung frei von tertiären Aminen, insbesondere frei von einkernigen aromatischen tertiären Aminen, vor allem frei von Verbindungen der Formel (III a) oder (III b).

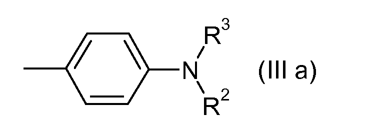

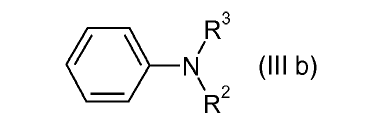

Hierbei stehen R² und R³ je unabhängig voneinander für eine Alkylgruppe mit 1 bis 8 Kohlenstoffatomen oder eine Hydroxyalkylgruppe mit 1 bis 8 Kohlenstoffatomen, welche gegebenenfalls mindestens ein Sauerstoffatom in Form von Ethersauerstoffatomen aufweist.

In einer besonders bevorzugten Ausführungsform besteht die radikalisch härtbare zweikomponentige (Meth)acrylat-Klebstoffzusammensetzung aus den folgenden Bestandteilen:
- mindestens ein radikalisch polymerisierbares (Meth)acrylatmonomer
- mindestens ein Oxidationsmittel **(OM)**
- ein Reduktionsmittel **(RM),** welches durch den Kontakt mit dem Oxidationsmittel **(OM)** reagiert, wobei eine Aufspaltung des Oxidationsmittels **(OM)** in Radikale und einen visuell sichtbaren Farbwechsel des Reduktionsmittels **(RM)** bewirkt wird
- gegebenenfalls mindestens ein bei Raumtemperatur flüssiges Elastomer oder Flüssigkautschuk **(C)**
- gegebenenfalls mindestens ein Core-Shell Polymer **(D)**
- gegebenenfalls mindestens ein Haftverbesserer **(E)**
- gegebenenfalls mindestens ein Alkoxysilan-Haftvermittler **(F)**
- gegebenenfalls mindestens ein Füllstoff **(G)**
- gegebenenfalls mindestens ein Bestandteil, welcher ausgewählt ist aus der Gruppe bestehend aus Zähigkeitsmodifikatoren, Farbstoffe, Pigmente, Inhibitoren, UV-Stabilisatoren, Metalloxide, Antistatika, Flammschutzmittel, Biozide, Weichmacher, Wachse, Verlaufsmittel, Haftvermittler, Thixotropiermittel, Abstandhalter.

Hierbei gilt die Massgabe, dass die erste Komponente **(K1)** die radikalisch polymerisierbaren (Meth)acrylatmonomere sowie das Reduktionsmittel **(RM)** enthält und dass die zweite Komponente **(K2)** die Oxidationsmittel **(OM)** enthält.

Diese Bestandteile sowie deren bevorzugte Mengenbereiche sind vorgängig bereits beschrieben worden.

Die beschriebenen radikalisch härtbaren zweikomponentigen (Meth)-acrylat-Klebstoffzusammensetzungen erfahren nach dem Mischen der zwei Komponenten miteinander einen visuell sichtbaren Farbwechsel. Dieser Farbwechsel ist in den meisten fällen sehr scharf und gibt das Ende der Offenzeit des Klebstoffs an. Weiterhin bietet der Farbwechsel auch eine Mittel der Qualitätskontrolle dafür, dass beide Komponenten vorhanden sind, beziehungsweise wie gut die Mischgüte ist. Dies ist besonders wichtig, wenn maschinelle Förderung, Mischung und/oder Applikation erfolgen. Wenn nämlich beide Komponenten die gleiche Farbe, z.B. weiss, aufweisen kann visuell nicht geprüft werden, ob beide Komponenten gefördert oder gemischt werden. Ein Fehlen eines Farbumschlages in den erfindungsgemässen radikalisch härtbaren zweikomponentigen (Meth)acrylat-Klebstoffzusammensetzungen ist somit ein klares Anzeichen dafür, dass nicht beide Komponenten miteinander gemischt wurden und somit keine Aushärtung erfolgt. Ein Vorhandensein von Streifen oder Marmorierungen in der ausgehärteten Zusammensetzung ist ein sichtbares Zeichen dafür, dass die zwei Komponenten schlecht miteinander gemischt wurden. Beide Qualitätsmängel führen zu schwerwiegenden Folgen, nämlich keine oder ungenügende Mechanik eines Klebverbundes. Somit bei den erfindungsgemässen (Meth)acrylatklebstoffe durch eine Kontrolle des Farbumschlages frühzeitig erkannt werden, wenn ein Produktionsproblem in einem Verklebungsprozesses vorliegt.

Die Offenzeit des Klebstoffes kann durch die Wahl des Reduktionsmittels **(RM)** gesteuert werden. So führt die Verwendung von Leukokristallviolett zu kürzer Offenzeit als bei der Verwendung der gleichen Menge Leukokristallviolettlacton als Reduktionsmittel **(RM).**

In einem weiteren Aspekt betrifft die vorliegende Erfindung ein Verfahren zum Verkleben, welches die Schritte umfasst:
i) Vermischen der ersten Komponente **(K1)** mit der zweiten Komponente **(K2)** einer, wie vorgängig beschriebenen, radikalisch härtbaren zweikomponentigen (Meth)acrylat-Klebstoffzusammensetzung;
ii) Applizieren der gemischten Klebstoffzusammensetzung auf ein erstes Substrat **(S1);**
iii) Kontaktieren der applizierten Zusammensetzung mit einem zweiten Substrat **(S2)** innerhalb der Offenzeit der Klebstoffzusammensetzung.
   Hierbei besteht das zweite Substrat **(S2)** aus dem gleichen oder einem unterschiedlichen Material wie das Substrat **(S1).**

Geeignete Substrate **(S1)** und/oder **(S2)** können sehr vielfältiger Art sein. Beispielsweise sind die Substrate **(S1)** und/oder **(S2)** anorganische Substrate wie Glas, Glaskeramik, Beton, Mörtel, Backstein, Ziegel, Gips und Natursteine wie Granit oder Marmor; Metalle oder Legierungen wie Aluminium, Stahl, Buntmetalle, verzinkte Metalle; organische Substrate wie Leder, Stoffe, Papier, Holz, mit Harz gebundene Holzwerkstoffe, Harz-Texil-Compositewerkstoffe, Kunststoffe wie Polyvinylchlorid (Hart- und Weich-PVC), Acrylonitril-Butadien-Styrol-Copolymere (ABS), SMC (Sheet Moulding Composites), Polycarbonat (PC), Polyamid (PA), Polyester, PMMA, Polyester, Epoxidharze, Polyurethane (PUR), Polyoxymethylen (POM), Polyolefine (PO), insbesondere mittels Plasma, Corona oder Flammen oberflächenbehandeltes Polyethylen (PE) oder Polypropylen (PP), Ethylen/Propylen-Copolymere (EPM) und Ethylen/Propylen-Dien-Terpolymere (EPDM); beschichtete Substrate wie pulverbeschichtete Metalle oder Legierungen; sowie Farben und Lacke, insbesondere Automobillacke.
Die Substrate können bei Bedarf vor dem Applizieren der Zusammensetzung vorbehandelt werden. Derartige Vorbehandlungen umfassen insbesondere physikalische und/oder chemische Reinigungsverfahren, beispielsweise Schleifen, Sandstrahlen, Bürsten oder dergleichen, oder Behandeln mit Reinigern oder Lösemitteln oder das Aufbringen eines Haftvermittlers, einer Haftvermittlerlösung oder eines Primers.

Insbesondere geeignet ist dieses Verfahren dann, wenn eine Kontrolle der Vermischung und/oder der Härtung über das Farbverhalten der Klebstoffzusammensetzung nach dem Vermischen der zwei Komponenten erfolgt.

Ein weiterer Aspekt der Erfindung betrifft eine gehärtete Zusammensetzung, welche durch das zumindest partiellen Mischen der ersten Komponente **(K1)** mit der zweiten Komponente **(K2)** einer wie vorgängig beschriebenen radikalisch härtbaren zweikomponentigen (Meth)acrylat-Klebstoffzusammensetzung erhalten wird.

Die ausgehärteten Zusammensetzungen weisen gute mechanische Eigenschaften und Haftungen auf. Diese Eigenschaften werden insbesondere nicht durch das Reduktionsmittel **(RM)** geändert.

Schliesslich betrifft ein weiterer Aspekt der Erfindung einen Verbundkörper, welcher aufgebaut ist aus einem ersten Substrat **(S1)** und einem zweiten Substrat **(S2)** und einem ausgehärteten Klebstoff, welcher aus dem zumindest partiellen Mischen der zwei Komponenten einer wie vorgängig beschriebenen radikalisch härtbaren zweikomponentigen (Meth)acrylat-Klebstoffzusammensetzung entsteht, und welcher diese zwei Substrate **(S1, S2)** miteinander verbindet.

Bei einem derartigen Verbundkörper handelt es sich insbesondere um ein Gebäude oder ein Bauwerk des Hoch- oder Tiefbaus, ein industriell gefertigtes Gut oder ein Konsumgut, insbesondere ein Fenster, eine Haushaltsmaschine, ein Werkzeug oder ein Transportmittel, insbesondere ein Fahrzeug, oder ein Anbauteil eines Fahrzeugs, bevorzugt ein Fenster oder eine Türe, wie sie in Bauwerken eingesetzt werden.

### Beispiele

Die folgenden Beispiele dienen lediglich zur Illustration und sollen die Erfindung in keinster Art und Weise limitieren.

### Zusammensetzungen

Es wurden die in Tabelle 1 in Gewichtsteilen aufgeführten ersten Komponente (K1) hergestellt, indem die Bestandteile unter Rühren und Inertatmosphäre folgenden zu Methylmethacrylat ("MMA") oder Tetrahydrofurfurylmethacrylat ("THFMA") in den angegebenen Mengen in einem Dissolver bei einer Temperatur von maximal 80 °C miteinander vermischt und eingerührt, bis eine makroskopisch homogene Paste erhalten wurde.
Als Azofarbstoffe, Leukofarbstoffe bzw. Reduktionsmittel, kamen zum Einsatz:
- Leukokristallviolett ("*LKV*")
- Leukokristallviolettlacton ("*LKVL*")
- Sudan Black B ("*SBB*", Sudanschwarz B)
- Sudan Red B ("*SRB*", Sudanrot B)
- Toluidin Blue O ("*TBO*", Toluidin Blau O)
- Janus Green B ("*JGB*", Janus Grün B)

Die in Tabelle 1 aufgeführten ersten Komponenten **(K1)** wurden mit einer zweiten Komponente **(K2)** ausgehärtet. Für diese zweite Komponente **(K2)** wurden 50 Gew.-% Dibenzoylperoxid (20 %-ig) in Weichmacher, 47.5 Gew.-% Kreide und 2.5 Gew.-% Thixotropiermittel in einem Dissolver miteinander vermischt. Die Dichte betrug 1.46 g/ml.
Diese zwei Komponenten **(K1** und **K2)** wurden in die getrennten Kammern von Koaxialkartuschen eingefüllt und bei der Anwendung in einem Volumenverhältnis **K1 : K2** von 10 : 1 mittels Statikmischer und Runddüse auf einen Karton bzw. auf Teflon (zur Herstellung von Filmen für die Herstellung von Probekörpern) appliziert.

### Testmethoden

### Farbwechsel

Der **Farbwechsel** wurde nach dem Mischen der jeweiligen zwei Komponenten visuell beurteilt.

### Aushärtung

Die **Aushärtung** wurde mittels Betasten der applizierten Rundraupe mit einem Spatel nach 30 Minuten nach dem Mischen der jeweiligen zwei Komponenten beurteilt.

### Offenzeit

Die **Offenzeit** wurde mittels regelmässigen Betasten der Rundraupe mit einem Spatel getestet. Der Zeitpunkt, bei welchem bei diesem Test ein erhöhter Widerstand, herrührend von der beginnenden Vernetzung, festgestellt werden konnte, wurde als Ende der Offenzeit ("OZ") bestimmt. Die Offenzeit entsprach bei den Beispielen ***1*** bis ***4*** auch dem Zeitpunkt des visuell beobachteten Farbwechsels.

### Zugfestigkeit und Bruchdehnung

Die **Zugfestigkeit** ("ZF"), die **Bruchdehnung** ("BD") und das **Elastizitätsmodul** wurden bestimmt nach DIN EN 53504 (Zuggeschwindigkeit: 200 mm/min) an Filmen mit einer Schichtdicke von 2 mm, welche während 7 Tagen im Normklima (23±1 °C, 50±5% relative Luftfeuchtigkeit) aushärteten. Das Elastizitätsmodul ist im Bereich von 0.5 bis 1% Dehnung ("E_{0.5-1%}"), bzw. 0.5 bis 8 % Dehnung ("E_{0.5-8%}") angegeben.

**Tabelle 1. Radikalisch härtende 2K-Klebstoffzusammensetzungen und deren Eigenschaften beim und nach Aushärten.**

| | ***1*** | ***2*** | ***3*** | ***4*** | ***R1*** | ***R2*** | ***R3*** | ***R4*** | ***R5*** |
|---|---|---|---|---|---|---|---|---|---|
| THFMA | 50 | | 50 | | 50 | 50 | 50 | 50 | 50 |
| MMA | | 50 | | 50 | | | | | |
| Hycar VTBN | 15 | 15 | 15 | 15 | 15 | 15 | 15 | 15 | 15 |
| Core-Shell-Polymer | 15 | 15 | 15 | 15 | 15 | 15 | 15 | 15 | 15 |
| Kreide | 20 | 20 | 20 | 20 | 20 | 20 | 20 | 20 | 20 |
| *LKV* | 1.5 | 1.5 | | | | | | | |
| *LKVL* | | | 1.5 | 1.5 | | | | | |
| *SBB* | | | | | 1.5 | | | | |
| SRB | | | | | | 1.5 | | | |
| *TBO* | | | | | | | 1.5 | | |
| *JGB* | | | | | | | | 1.5 | |
| Diisopropyl-p-Toluidin | | | | | | | | | 1.5 |
| Dichte [g/ml] | 1.17 | 1.11 | 1.17 | 1.11 | 1.17 | 1.17 | 1.17 | 1.17 | 1.17 |
| Farbwechsel | weiss→ violett | weiss→ gelbgrün | weiss→ violett | weiss→ gelbgrün | - | - | - | - | - |
| ausgehärtet | ja | ja | ja | ja | nein | nein | nein | nein | ja |
| OZ [min] | 2.2 | 1.8 | 4.5 | 4.2 | | | | | 3.2 |
| ZF [MPa] | 11 | 15 | 11 | 15 | | | | | 11 |
| BD [%] | 153 | 82 | 156 | 85 | | | | | 154 |
| E_{0.5-1%}[MPa] | 205 | 415 | 208 | 409 | | | | | 202 |
| E_{0.5-8%}[MPa] | 70 | 109 | 71 | 112 | | | | | 69 |

Die Ergebnisse von Tabelle 1 zeigen, dass die erfindungsgemässen Zusammensetzungen ***1*** bis ***4*** verlässlich einen Farbwechsel anzeigen und damit die Offenzeit des Klebstoffes anzeigen, während dies bei den Referenzbeispielen ***R1*** bis ***R4*** aufgrund der ausbleibenden Aushärtung nicht der Fall ist. Weiterhin zeigt sich im Vergleich der Beispiele ***1*** und ***2*** mit ***R5***, dass das Reduktionsmittel **(RM)** keine negative Beeinflussung der mechanischen Werte im Vergleich zu Diisopropyl-p-Toluidin, einem Reduktionsmittel, welches beim Kontakt mit dem Oxidationsmittel **(OM)** keinen visuellen Farbwechsel erfährt, zur Folge hat.

## Patentansprüche

1. Radikalisch härtbare zweikomponentige (Meth)acrylat-Klebstoffzusammensetzung, bestehend aus einer ersten Komponente **(K1**) und einer zweiten Komponente **(K2),**
wobei die erste Komponente **(K1**)
mindestens ein radikalisch polymerisierbares (Meth)acrylatmonomer
sowie ein Reduktionsmittel **(RM)** enthält,
und die die zweite Komponente **(K2)**
mindestens ein Oxidationsmittel **(OM)** enthält;
wobei das Reduktionsmittel **(RM)** durch den Kontakt mit dem Oxidationsmittel **(OM)** reagiert, wobei eine Aufspaltung des Oxidationsmittels **(OM)** in Radikale und einen visuell sichtbaren Farbwechsel des Reduktionsmittels **(RM)** bewirkt wird;
und wobei die zweikomponentige Klebstoffzusammensetzung frei von Reduktionsmitteln ist, welche beim Kontakt mit dem Oxidationsmittel **(OM)** keinen visuellen Farbwechsel erfahren.

2. Radikalisch härtbare zweikomponentige (Meth)acrylat-Klebstoffzusammensetzung gemäss Anspruch 1, **dadurch gekennzeichnet, dass** das (Meth)acrylatmonomer ein Methacrylat, insbesondere ausgewählt aus der Gruppe bestehend aus Methylmethacrylat (MMA), Tetrahydrofurfurylmethacrylat (THFMA), Cyclohexylmethacrylat (CHMA), Isobornylmethacrylat (IBMA), Trimethylcyclohexylmethacrylat (TMCHMA), bevorzugt Methylmethacrylat (MMA) und Tetrahydrofurfurylmethacrylat (THFMA), ist.

3. Radikalisch härtbare zweikomponentige (Meth)acrylat-Klebstoffzusammensetzung gemäss Anspruch 1 oder 2, **dadurch gekennzeichnet, dass** das Reduktionsmittel **(RM)** in Kontakt mit dem Oxidationsmittel (OM) der zweiten Komponente einen Farbwechsel von farblos zu farbig erfährt.

4. Radikalisch härtbare zweikomponentige (Meth)acrylat-Klebstoffzusammensetzung gemäss einem der vorhergehenden Ansprüche, **dadurch gekennzeichnet, dass** das Reduktionsmittel (RM) die Formel (I a) oder (I b) aufweist 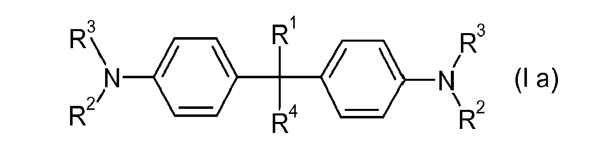 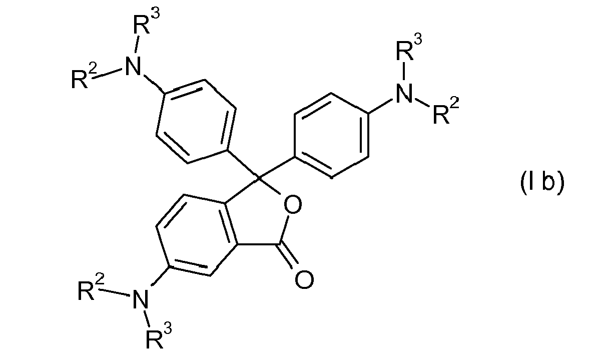 wobei R¹ für H oder OH steht
R² und R³ je unabhängig voneinander für eine Alkylgruppe mit 1 bis 8 Kohlenstoffatomen oder eine Hydroxyalkylgruppe mit 1 bis 8 Kohlenstoffatomen, welche gegebenenfalls mindestens ein Sauerstoffatom in Form von Ethersauerstoffatomen aufweist; steht;
R⁴ für H, Phenyl, Aryl oder einen Rest der Formel (II) steht.

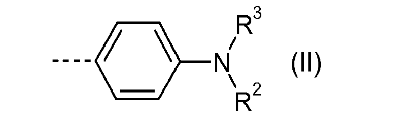

5. Radikalisch härtbare zweikomponentige (Meth)acrylat-Klebstoffzusammensetzung gemäss einem der vorhergehenden Ansprüche, **dadurch gekennzeichnet, dass** das Reduktionsmittel (RM) Leukokristallviolettlacton oder Leukokristallviolett ist.

6. Radikalisch härtbare zweikomponentige (Meth)acrylat-Klebstoffzusammensetzung gemäss einem der vorhergehenden Ansprüche, **dadurch gekennzeichnet, dass** das Oxidationsmittel (OM) ein organisches Peroxid, Hydroperoxid oder Perester, bevorzugt Dibenzoylperoxid, ist.

7. Radikalisch härtbare zweikomponentige (Meth)acrylat-Klebstoffzusammensetzung gemäss einem der vorhergehenden Ansprüche, **dadurch gekennzeichnet, dass** die Zusammensetzung frei von tertiären Aminen, insbesondere frei von einkernigen aromatischen tertiären Aminen, vor allem frei von Verbindungen der Formel (III a) oder (III b), ist 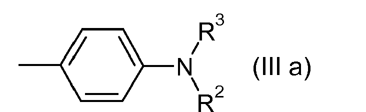 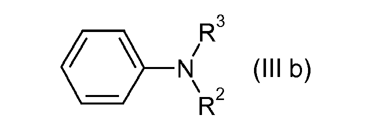 wobei R² und R³ je unabhängig voneinander für eine Alkylgruppe mit 1 bis 8 Kohlenstoffatomen oder eine Hydroxyalkylgruppe mit 1 bis 8 Kohlenstoffatomen, welche gegebenenfalls mindestens ein Sauerstoffatom in Form von Ethersauerstoffatomen aufweist, steht.

8. Radikalisch härtbare zweikomponentige (Meth)acrylat-Klebstoffzusammensetzung gemäss einem der vorhergehenden Ansprüche, **dadurch gekennzeichnet, dass** der Anteil des Reduktionsmittels **(RM)** 0.2 - 5.0 Gew.-%, insbesondere 1.0 - 2.5 Gew.-%, am Gewicht der Klebstoffzusammensetzung ist.

9. Radikalisch härtbare zweikomponentige (Meth)acrylat-Klebstoffzusammensetzung gemäss einem der vorhergehenden Ansprüche, **dadurch gekennzeichnet, dass** die Klebstoffzusammensetzung weiterhin mindestens ein bei Raumtemperatur flüssiges Elastomer oder Flüssigkautschuk (C), insbesondere ein bei Raumtemperatur flüssiges Elastomer oder Flüssigkautschuk, welches olefinisch ungesättigte Gruppen aufweist, bevorzugt ein (Meth)acrylat-Gruppen aufweisendes Polyurethan-Polymer oder Polybutadien-Copolymer.

10. Radikalisch härtbare zweikomponentige (Meth)acrylat-Klebstoffzusammensetzung gemäss einem der vorhergehenden Ansprüche, **dadurch gekennzeichnet, dass** die Klebstoffzusammensetzung weiterhin mindestens ein Core-Shell-Polymer (**D**)enthält.

11. Radikalisch härtbare zweikomponentige (Meth)acrylat-Klebstoffzusammensetzung gemäss einem der vorhergehenden Ansprüche, **dadurch gekennzeichnet, dass** die Zusammensetzung zusätzlich mindestens einen Haftverbesserer (**E**), insbesondere ein Metall(meth)acrylat, bevorzugt ein Metall(meth)acrylat von Calcium, Magnesium oder Zink, welches eine Hydroxylgruppe und/oder (Meth)acrylsäure oder (Meth)acrylat als Ligand oder Anion aufweist;
oder ein (Meth)acrylat der Formel (IV) enthält, 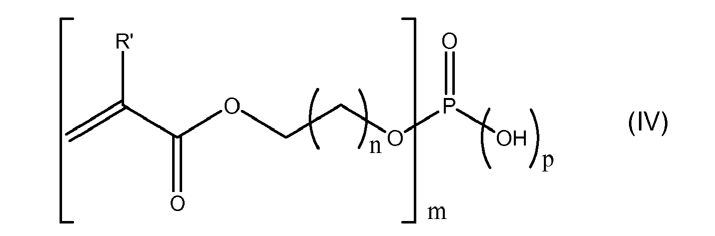 wobei R' entweder für ein Wasserstoffatom oder für eine Methylgruppe steht;
n für einen Wert von 1 bis 15, insbesondere von 1 bis 5, bevorzugt von 1 bis 3, steht;
m für einen Wert von 1 bis 3 steht;
und p für einen Wert von 3 minus m steht;
insbesondere 2-Methacryloyloxyethylphosphat, Bis(2-Methacryloyloxyethyl)phosphat und Tris(2-Methacryloyloxyethyl)phosphat sowie Mischungen davon.

12. Verfahren zum Verkleben umfassend die Schritte:
i) Vermischen der ersten Komponente **(K1)** mit der zweiten Komponente **(K2)** einer radikalisch härtbaren zweikomponentigen (Meth)acrylat-Klebstoffzusammensetzung gemäss einem der Ansprüche 1 bis 11;
ii) Applizieren der gemischten Klebstoffzusammensetzung auf ein erstes Substrat **(S1);**
iii) Kontaktieren der applizierten Zusammensetzung mit einem zweiten Substrat **(S2)** innerhalb der Offenzeit der Klebstoffzusammensetzung;
wobei das zweite Substrat **(S2)** aus dem gleichen oder einem unterschiedlichen Material wie das Substrat **(S1)** besteht.

13. Verfahren zum Verkleben gemäss Anspruch 12, **dadurch gekennzeichnet, dass** eine Kontrolle der Vermischung und/oder der Härtung über das Farbverhalten der Klebstoffzusammensetzung nach dem Vermischen der zwei Komponenten erfolgt.

14. Gehärtete Zusammensetzung, **dadurch gekennzeichnet, dass** sie aus durch das zumindest partiellen Mischen der ersten Komponente **(K1)** mit der zweiten Komponente **(K2)** einer radikalisch härtbaren zweikomponentigen (Meth)acrylat-Klebstoffzusammensetzung gemäss einem der Ansprüche 1 bis 11 erhalten wird.

15. Verbundkörper, welcher aufgebaut ist aus einem ersten Substrat **(S1)** und einem zweiten Substrat **(S2)** und einem ausgehärteten Klebstoff, welcher aus dem zumindest partiellen Mischen der zwei Komponenten einer radikalisch härtbaren zweikomponentigen (Meth)acrylat-Klebstoffzusammensetzung gemäss einem der Ansprüche 1 bis 11 entsteht, und welcher diese zwei Substrate **(S1, S2)** miteinander verbindet.

16. Verbundkörper gemäss Anspruch 15, **dadurch gekennzeichnet, dass** es sich bei diesem Verbundkörper um ein Gebäude oder ein Bauwerk des Hoch- oder Tiefbaus, ein industriell gefertigtes Gut oder ein Konsumgut, insbesondere ein Fenster, eine Haushaltsmaschine, ein Werkzeug oder ein Transportmittel, insbesondere ein Fahrzeug, oder ein Anbauteil eines Fahrzeugs, bevorzugt ein Fenster oder eine Türe, wie sie in Bauwerken eingesetzt werden, handelt.
